# EUROPÄISCHE PATENTSCHRIFT

(11) **EP 2 140 765 B1**
(45) Veröffentlichungstag und Bekanntmachung des Hinweises auf die Patenterteilung: **17.04.2013**
(21) Anmeldenummer: 08011983.7
(22) Anmeldetag: 03.07.2008
(51) Int. Cl.: A22C 13/00

(54) **Wursthülle mit verbesserter Bräthaftung**
Sausage skin with improved sausage meat adhesion
Boyau à saucisse doté d'une adhérence améliorée

(43) Veröffentlichungstag der Anmeldung: 06.01.2010
(73) Patentinhaber: CaseTech GmbH & Co. KG, 29699 Bomlitz (DE)
(72) Erfinder: Blumenberg, Klaus-Dieter, 29664 Walsrode (DE); Henze-Wethkamp, Heinrich, 29664 Walsrode (DE); Neuschulz, Willi, 29683 Bad Fallingbostel (DE)
(74) Vertreter: Polypatent

(56) Entgegenhaltungen:
- EP-A- 0 088 308
- EP-A- 0 249 793
- EP-A- 1 872 662
- WO-A-2005/092108
- DE-A1- 10 360 610

## Beschreibung

Die Erfindung betrifft eine Lebensmittelhülle für Wurstwaren, insbesondere eine schlauchförmige Wursthülle auf Basis von Cellulose, mit einer innenseitig aufgetragenen Beschichtungszusammensetzung und einer dadurch verbesserten Haftung zwischen Füllgut und Wursthülle.

Schlauchförmige Hüllen sind als Verpackungsmaterialien für Nahrungsmittel vielfältig im Einsatz und werden in sehr grossem Umfang für die Herstellung von verarbeiteten Fleischprodukten wie Wurstwaren verwendet. Wird die Innenseite solcher Nahrungsmittelhüllen unbehandelt verwendet, so beobachtet man, dass bei der Wurstherstellung, insbesondere der Rohwurstherstellung, das Brät nicht fest genug an der Wursthülle haftet. Infolgedessen kommt es bei der Wurst zu teilweisem Ablösen von der Wursthülle, häufig verbunden mit einer unerwünschten Ausbildung eines Öl- oder Geleefilmes auf dem Wurstgut.

Wegen des Ablösens schrumpft auch die Nahrungsmittelhülle nicht mehr mit dem Füllgut, so dass die Wurst faltig und unansehnlich erscheint.

Um diese genannten Nachteile zu beheben, wird z.B. in der EP-A-88 308 und US-A-3 378 379 vorgeschlagen, die Innenseite der Nahrungsmittelschlauchhülle aus regenerierter Cellulose mit einer Beschichtung auf Basis von Polyethylenimin, chemisch modifizierter Eiweisse, Epichlorhydrin-, Polyamin-Polyamid-, Harnstoff- oder Melamin-Formaldehyd-Harze zu versehen.

Diese Innenausrüstung von Nahrungsmittelschlauchhüllen führt zwar zu einer Verbesserung der Haftung, die aber nicht für alle Anwendungszwecke der Rohwurstherstellung ausreichend ist. Ausserdem beobachtet man, dass so innenbeschichtete Schlauchhüllen verkleben können und dadurch das Öffnen und Füllen stark behindert werden kann.

In der WO 2005/092108 A1 wird eine schlauchförmige Wursthülle auf Basis von Cellulose mit einer Innenimprägnierung, die mindestens eine Haft- und mindestens zwei Trennkomponenten umfasst, beschrieben. Damit soll die Aufgabe gelöst werden, eine ausreichende Haftung über die gesamte Reifedauer der Wurst bei gleichzeitiger minimaler Haftung der Hüllen beim Abschälen zu erreichen. Die Haftkomponente und eine der Trennkomponenten ist dabei an die Cellulose der Hülle gebunden. Als Haftkomponente werden bevorzugt Casein, Gelatine, Weizenprotein, Sojaprotein, Chitosan, Aminoplast-Vorkondensate oder Polyamin-Polyamid-Epichlorhydrin-Harze verwendet.

Insbesondere für lange gereifte Rohwursttypen ist die Bräthaftung derartiger Wursthüllen jedoch nicht ausreichend und es kann zum unerwünschten Abstellen der Wursthülle führen.

Ziel der vorliegenden Erfindung war es nun eine schlauchförmige Wursthülle auf Basis von Cellulose zur Verfügung zu stellen, die aufgrund ihrer speziellen Innenbeschichtung eine ausgezeichnete Haftung zum Füllgut, insbesondere für lange gereifte Rohwursttypen, aufweist und problemlos verarbeitet werden kann.

Gelöst wird diese Aufgabe durch eine schlauchförmige Wursthülle auf Basis von Cellulose gemäß Anspruch 1, die gegebenenfalls faserverstärkt ist, mit einer innenseitig aufgetragenen Beschichtungszusammensetzung, dadurch gekennzeichnet, dass die Beschichtungszusammensetzung als Anhaftungskomponenten mindestens ein kationisches Polymer und mindestens eine Eiweissverbindung ausgewählt aus der Gruppe, die Gelatine, Sojaprotein, Weizenprotein, Erdnussprotein, Caseinat und Casein umfasst, enthält, wobei überraschend gefunden wurde, dass diese Beschichtungszusammensetzung in synergistischer Weise eine starke Bräthaftung bewirkt.

Geeignete kationische Polymere, die als Haftkomponente in der vorliegenden Erfindung Verwendung finden können, schließen bestimmte hitzehärtbare Aldehydpolymere von Lebensmittelqualität ein, wie etwa Aminoharze, wie z.B. Melamin-Formaldehydpolymer. Sie sind im Handel bei der American Cyanamid unter der Handelsmarke "ACCOBOND" erhältlich. ACCOBOND 3524 ist beispielsweise stark methyloliertes Melamin-Formaldehydvorkondensat. Andere geeignete kationische Polymere schließen die wasserlöslichen, hitzehärtbaren epoxysubstituierten polysekundären Aminharze ein. Allgemein sind sie Kondensate von Epichlorhydrin und einem Polyamid. Dies sind Oligomere oder höhermolekulare Harzmaterialien mit mehreren sekundären Aminogruppen, wie Polyamidamine, Polyharnstoffamine und dergleichen. Die kationischen epoxysubstituierten polysekundären Aminhaftmittel sind vorzugsweise Kondensationsprodukte von Epichlorhydrin und eines Polyaminvorpolymers, das aus einer Dicarbonsäure, wie Adipinsäure, Glutarsäure und Bernsteinsäure, und einem Diethylentriamin gebildet werden. Variationen der epoxysubstituierten polysekundären Amine können brauchbare Haftkomponenten sein, indem man die innere Struktur Diethylentriamins modifiziert oder und/oder alternative Dicarbonsäuren, wie sie oben erwähnt sind, verwendet. Besonders brauchbare kationische hitzehärtbare Haftkomponenten sind im Handel bei der Hercules, Inc. unter der Handelsbezeichnung KYMENE®, z. B. Type 557, erhältlich. Solche Produkte sind auch als Hercules-Harz 2000 oder RESAMINE® bekannt, die auch wasserlösliche hitzehärtbare kationische Polymere sind, z. B. Reaktionsprodukte von Epichlorhydrin und Adipinsäure-Diethylentriamin-Polyamid. Spezielle Beispiele geeigneter Harze sind Polyamin-Polyamidharze, Polyethyleniminharze und Vinylamin-N-Vinylformamidkombinationsharze. Handelstypen solcher Harze sind z. B. KYMENE 557H und KYMENE SLX von Hercules, RESAMINE 3632 und RESAMINE 3608 von Hoechst und LURESIN KTU von BASF.

Als kationisches Polymer wird insbesondere eines oder mehrere aus der Gruppe, die Polyaminoamide, Polyethylenimine und deren Kondensationsprodukte mit Epichlorhydrin umfasst, ausgewählt. Bevorzugt werden solche kationischen Polymere ausgewählt, die mit der Celluloseoberfläche der Wursthülle vernetzen können, da sie noch freie und entsprechend geeignete Gruppen aufweisen, z.B. Chlorhydringruppen und Epoxid-Gruppierungen. Ein besonders bevorzugt verwendetes Kondensationsprodukt ist daher z.B. Polyaminoamid-Epichlorhydrinharz. Polyaminoamid-Epichlorhydrinharze werden für die Innenbeschichtung von Wursthüllen bereits eingesetzt und sind gesundheitlich unbedenklich. Sie sind gelistet in der Empfehlung 44 (Kunstdärme) des Bundesinstitutes für Risikobewertung.

Die erfindungsgemäße Wursthülle enthält einen Anteil an kationischem Polymer in der Beschichtungszusammensetzung von 0,05 bis 0,6 Gew.-% bezogen auf die Wursthülle.

Die zweite Haftkomponente ist eine Eiweißverbindung und vorzugsweise ein natürliches Eiweiß, wie Casein, Gelatine, Weizenprotein oder Sojaprotein. Das Casein kann vorzugsweise als Caseinat vorliegen.

Der Anteil an Eiweissverbindung in der Beschichtungszusammensetzung der erfindungsgemäßen Wursthülle beträgt 0,01 bis 0,15 Gew.-% bezogen auf die Wursthülle.

Das Gewichtsverhältnis von kationischem Polymer zur Eiweißverbindung in der Beschichtungszusammensetzung liegt vorzugsweise zwischen 10:1 und 1:10, besonders bevorzugt zwischen 4:1 und 1:4.

In einer besonders bevorzugten Ausführungsform der erfindungsgemäßen Wursthülle umfasst die Beschichtungszusammensetzung als Anhaftungskomponenten mindestens ein Gemisch aus Polyaminoamid-Epichlorhydrinharz und Casein oder ein Gemisch aus Polyaminoamid-Epichlorhydrin-Harz und Caseinat. Dabei wird insbesondere ein Gemisch aus Polyaminoamid-Epichlorhydrin-Harz und Calciumcaseinat bevorzugt.

Das Gewichtsverhältnis von Polyaminoamid-Epichlorhydrin-Harz zu Casein bzw. Caseinat liegt vorzugsweise bei 10:1 und 1:10, besonders bevorzugt zwischen 4:1 und 1:4.

In einer bevorzugten Ausführungsform enthält die Beschichtungszusammensetzung der erfindungsgemäßen Wursthülle zusätzlich ein oder mehrere Trennmittel. Als Trennmittel eignen sich neben natürlichen und synthetischen Ölen, z.B. epoxidierte natürliche Öle, insbesondere natürliche Wachse wie Carnaubawachs, Bienenwachs, Candelillawachs und Montanwachs; mineralische Trennmittel wie z.B. amorphe Kieselsäure; sowie Dialkyldiketene mit zwei C₁₀-C₂₂-Alkylketten. Besonders bevorzugt ist Carnaubawachs wegen der lebensmittelrechtlichen Unbedenklichkeit und der Verfügbarkeit von stabilen Dispersionen.

Sofern die Beschichtungszusammensetzung ein oder mehrere Trennmittel enthält, kann deren Anteil 0,01 bis 0,12 Gew.-% bezogen auf die Wursthülle betragen.

In einer bevorzugten Ausführungsform der Erfindung ist die Wursthülle ein Cellulosefaserdarm.

Die erfindungsgemäße Wursthülle kann dadurch hergestellt werden, dass auf die Innenseite der Wursthülle eine wässrige Beschichtungszusammensetzung wie sie oben beschrieben wird, aufgetragen und die Wursthülle anschließend getrocknet wird.

In einer bevorzugten Ausführungsform des erfindungsgemäßen Verfahrens kann auf die Innenseite der Wursthülle eine wässrige Beschichtungszusammensetzung enthaltend 1 bis 12 Gew.-% des kationischen Polymers und/oder 0,3 bis 3 Gew.-% der Eiweissverbindung und optional 0,2 bis 2 Gew.-% des Trennmittels aufgetragen und die Wursthülle anschließend getrocknet werden.

Nach dem Trocknen der Wursthülle beträgt der Anteil des kationischen Polymers in der auf die Innenseite der Wursthülle aufgetragenen Beschichtungszusammensetzung ca. 40 bis 480 mg/m². Die Menge an Eiweißverbindung beträgt vorzugsweise 12 bis 120 mg/m². Für den Fall, dass ein Trennmittel in der Beschichtungszusammensetzung vorhanden ist, beträgt der Anteil an Trennmittel in der Beschichtungszusammensetzung, die auf die Innenseite der Wursthülle aufgetragen wurde, nach dem Trocknen der Wursthülle 8 bis 80 mg/m².

Die Herstellung der erfindungsgemäßen faserverstärkten Wursthülle erfolgt nach Verfahren, die dem Fachmann prinzipiell bekannt sind. Dabei wird das Faservlies zum Schlauch geformt, mit Viskose beidseitig beschichtet, in üblichen schwefelsäurehaltigen Fällbädern regeneriert, gewaschen und mit Glyzerin als Weichmacher behandelt. Der erfindungsgemäße Überzug auf der Innenseite der Celluloseregenerathülle wird vorzugsweise vor der Trocknung aufgebracht. Dazu wird in den Celluloseregeneratschlauch eine wässrige Beschichtungszusammensetzung enthaltend 1 bis 12 Gew.-% des kationischen Polymers und 0,3 bis 3 Gew.-% der Eiweissverbindung und optional 0,2 bis 2 Gew.-% des Trennmittels eingefüllt. Die wässrige Imprägnierlösung wird als Flüssigkeitsblase durch ein Abquetschwalzenpaar stationär in dem sich kontnuierlich in Maschinenrichtung weiterbewegten Celluloseregeneratschlauch gehalten, wobei die Imprägnierlösung gleichmäßig auf die Innenoberfläche aufgetragen wird. Danach wird die Hülle getrocknet, flachgelegt und zu Rollen aufgewickelt, wobei die erfindungsgemäßen Hüllen auch bei längerer Lagerung nicht verkleben und sich beispielsweise beim anschließenden Konfektionieren zu gerafften Schlauchraupen problemlos öffnen lassen.

Gegenstand der Erfindung ist schließlich weiterhin die Verwendung der erfindungsgemässen Wursthülle zur Herstellung von Rohwurst, insbesondere von länger als drei Wochen, bevorzugt länger als einen Monat, besonders bevorzugt länger als zwei Monate, und weiter besonders bevorzugt länger als drei Monate, gereiften Typen, wie z.B. ungarische Wintersalami. Die erfindungsgemässen Wursthülle eignen sich auch zur Herstellung von Wurstsorten die nach ihrer Fertigstellung einen Produktionsschritt durchlaufen bei dem sie auf minderstens 50 °C erhitzt werden, zumal wenn sie viel Fett enthalten, wie z.B. die in USA bekannte Genoa.

### Beispiele

Die Wursthüllen der folgenden Beispiele 1 bis 5 wurden im Wesentlichen nach dem vorstehend beschriebenen Verfahren im Nennkaliber 95 produziert. Dabei wurde jeweils ein Faservlies zu einem Schlauch geformt, mit Viskose beidseitig beschichtet, in einem schwefelsäurehaltigen Fallbad regeneriert, gewaschen und mit Glyzerin als Weichmacher behandelt, um einen entsprechenden Celluloseregeneratschlauch zu erhalten.

Anschließend wurde der Celluloseregeneratschlauch ohne vorher getrocknet zu werden mit der in der untenstehenden Tabelle genannten Imprägnierlösung (Beschichtungszusammensetzung) behandelt. Dazu wurde in den Celluloseregeneratschlauch eine wässrige Imprägnierlösung eingefüllt. Die Gehaltsangaben der Substanzen in Gew. % stehen jeweils für die Masse der gelösten Reinsubstanz bezogen auf die Masse der gesamten Imprägnierlösung. Als Lösungsmittel für die in den Beispielen 1 bis 5 (Tabelle 1) eingesetzten Substanzen wird Wasser verwendet. Das verwendete Plasvita® M ist ein wasserlösliches Calcium-Caseinat mit einem Wirkstoffgehalt von 95 Gew. % (Rest Wasser), hergestellt von Fa. Rovita. Das verwendete Polyaminoamid-Epichlorhydrin-Harz ist Kymene® SLX, Hersteller Fa. Hercules, mit einem Wirkstoffgehalt von 13 Gew. % (Rest Wasser). Als Entschäumer wird das Neudos® AS23 , ein Alkylpolyalkylenglykolether von der Fa. Ochsmann Chemie GmbH, als Emulsion mit 20 Gew. % Wirkstoffgehalt (Rest Wasser) eingesetzt.

Die wässrige Imprägnierlösung wurde als Flüssigkeitsblase durch ein Abquetschwalzenpaar stationär in dem sich kontnuierlich in Maschinenrichtung weiterbewegten Celluloseregeneratschlauch gehalten, wobei die Imprägnierlösung gleichmäßig auf die Innenoberfläche aufgetragen wurde. Danach wurde die Hülle getrocknet, flachgelegt und zu Rollen aufgewickelt.

Abschnitte des Celluloseregeneratschlauches wurden 30 Minuten in handwarmen fließenden Wasser gewässert und dann damit Würste vom Rohwursttyp hergestellt, näher beschrieben als mittelfein gekörnte Salami, hergestellt aus 55 Gew.-% magere sehnenfreie Schweinefleischabschnitte mit einem sichtbaren Fettanteil von ca. 5%, 25 Gew.-% kerniger, fetter Schweinerückenspeck ohne Schwartenzug und 20 Gew.-% gut entsehntes und entfettetes Kuhfleisch sowie mit den weiteren Zutaten Nitritpökelsalz, Gewürzmischung und Starterkultur. Die Salamiwürste wurden in einer Reifungsphase von 23 °C und 94% rel. Luftfeuchte innerhalb von 7 Tagen auf 16°C und 82 % rel. Luftfeuchte gebracht, wobei nach 3 Tagen im Buchenkaltrauch bei ca. 23 °C leicht angeräuchert wurde. Die anschließende Nachreifung erfolgte innerhalb von 16 Tagen bei 16°C und 80 % rel. Luftfeuchte, wobei nach 7 Tagen die Würste im Kaltrauch fertig geräuchert wurden.

Danach wurde die manuelle Schälbarkeit der Würste beurteilt. In einer Skala von 0 bis 5 zunehmender Haftung der Wursthülle an der Wurst erfolgte die Bewertung der Bräthaftung. In der Tabelle sind die Mittelwerte der Bräthaftungen der pro Beispiel jeweils hergestellten 3 Salamiwürste angegeben.

In Beispiel 1 und 2 wurde von den Hauptkomponenten nur das Polyaminoamid-Epichlorhydrin-Harz und in Beispiel 3 und 4 nur das Calciumcaseinat eingesetzt. Die Kombination der Komponenten in Beispiel 5 führt durch den synergistischen Effekt zur deutlichen Erhöhung der Bräthaftung.

**Tabelle1: Bräthaftung in Abhängigkeit der Zusammensetzung der Imprägnierlösung**

| **Substanzen in der Imprägnierlösung** | **Beispiel 1** **[Gew.-%]** | **Beispiel 2** **[Gew.-%]** | **Beispiel 3** **[Gew.-%]** | **Beispiel 4** **[Gew.-%]** | **Beispiel 5** **[Gew.-%]** |
|---|---|---|---|---|---|
| Plasvita® M | | | 1,0 | 5,0 | 1,0 |
| Kymene® SLX | 5,0 | 8,0 | | | 4,0 |
| Neudos® AS23 | 0,2 | 0,2 | 0,2 | 0,2 | 0,2 |
| Glycerin | 16,0 | 16,0 | 16,0 | 16,0 | 16,0 |
| Kaliumsorbat | 0,2 | 0,2 | 0,2 | 0,2 | 0,2 |
| Natriumhydroxid | 0,1 | 0,1 | 0,1 | 0,1 | 0,1 |
| **Bräthaftung** **(Mittelwert)** | **2,5** | **2,9** | **1,6** | **2,7** | **3,8** |

## Patentansprüche

1. Schlauchförmige Wursthülle auf Basis von Cellulose mit einer innenseitig aufgetragenen Beschichtungszusammensetzung, **dadurch gekennzeichnet, dass** die Beschichtungszusammensetzung als Anhaftungskomponenten mindestens ein kationisches Polymer und mindestens eine Eiweissverbindung ausgewählt aus der Gruppe, die Gelatine, Sojaprotein, Weizenprotein, Erdnussprotein, Caseinat und Casein umfasst, enthält, der Anteil an kationischem Polymer 0,05 bis 0,6 Gew.-% bezogen auf die Wursthülle und der Anteil an Eiweissverbindung 0,01 bis 0,15 Gew.-% bezogen auf die Wursthülle beträgt.

2. Wursthülle nach Anspruch 1, wobei das kationische Polymer aus der Gruppe, die Polyaminoamide, Polyethylenimine und deren Kondensationsprodukte mit Epichlorhydrin umfasst, ausgewählt ist, vorzugsweise Polyaminoamid-Epichlorhydrinharz.

3. Wursthülle nach einem der vorhergehenden Ansprüche, wobei die Beschichtungszusammensetzung als Anhaftungskomponenten mindestens ein Gemisch aus Polyaminoamid-Epichlorhydrin-Harz und Casein oder ein Gemisch aus Polyaminoamid-Epichlorhydrin-Harz und Caseinat, bevorzugt ein Gemisch aus Polyaminoamid-Epichlorhydrin-Harz und Calciumcaseinat, umfasst.

4. Wursthülle nach einem der vorhergehenden Ansprüche, wobei die Beschichtungszusammensetzung zusätzlich mindestens ein Trennmittel, vorzugsweise Carnaubawachs, umfasst.

5. Wursthülle nach Anspruch 4, wobei der Anteil an Trennmittel 0,01 bis 0,12 Gew.-% bezogen auf die Wursthülle beträgt.

6. Wursthülle nach einem der vorhergehenden Ansprüche, wobei die Wursthülle ein Cellulosefaserdarm ist.

7. Verfahren zur Herstellung einer schlauchförmigen Wursthülle nach einem der vorhergehenden Ansprüche, **dadurch gekennzeichnet, dass** auf die Innenseite der Wursthülle eine wässrige Beschichtungszusammensetzung wie in den Ansprüchen 1 bis 4 definiert aufgetragen und die Wursthülle anschließend getrocknet wird.

8. Verfahren zur Herstellung einer schlauchförmigen Wursthülle nach Anspruch 7, **dadurch gekennzeichnet, dass** auf die Innenseite der Wursthülle eine wässrige Beschichtungszusammensetzung enthaltend 1 bis 12 Gew.-% des kationischen Polymers und 0,3 bis 3 Gew.-% der Eiweissverbindung und optional 0,2 bis 2 Gew.-% des Trennmittels aufgetragen und die Wursthülle anschließend getrocknet wird.

9. Verwendung der Wursthülle nach einem der Ansprüche 1 bis 6 für Rohwurst, vorzugsweise für länger als drei Wochen, besonders bevorzugt länger als drei Monate, gereifte Rohwurst und für solche Wurstsorten, die nach ihrer Fertigstellung einen Produktionsschritt durchlaufen bei dem sie auf minderstens 50 °C erhitzt werden.

## Claims

1. A tubular sausage skin, based on cellulose, having a coating composition applied to the inside, **characterized in that** said coating composition contains as adhesion components at least one cationic polymer and at least one protein compound selected from the group comprising gelatin, soy protein, wheat protein, peanut protein, caseinate, and casein, wherein the proportion of said cationic polymer is 0.05 to 0.6 weight percent, based on the weight of the sausage skin, and the proportion of said protein compound is 0.01 to 0.15 weight percent, based on the weight of the sausage skin.

2. The sausage skin according to claim 1, wherein said cationic polymer is selected from the group comprising polyaminoamides, polyethyleneimines, and their condensation products with epichlorohydrin, preferably polyaminoamide-epichlorohydrin resin.

3. The sausage skin according to any one of the preceding claims, wherein said coating composition comprises as adhesion components at least a mixture of polyaminoamide-epichlorohydrin resin and casein, or a mixture of polyaminoamide-epichlorohydrin resin and caseinate, preferably a mixture of polyaminoamide-epichlorohydrin resin and calcium caseinate.

4. The sausage skin according to any one of the preceding claims, wherein said coating composition additionally comprises at least one release agent, preferably carnauba wax.

5. The sausage skin according to claim 4, wherein the proportion of said release agent is 0.01 to 0.12 weight percent, based on the weight of the sausage skin.

6. The sausage skin according to any one of the preceding claims, wherein said sausage skin is a cellulose fibrous casing.

7. A method for manufacturing a tubular sausage skin according to any one of the preceding claims, **characterized in that** an aqueous coating composition, as defined in claims 1 to 4, is applied to the inside of said sausage skin, and that said sausage skin is subsequently dried.

8. The method for manufacturing a tubular sausage skin according to claim 7, **characterized in that** an aqueous coating composition containing 1 to 12 weight percent of said cationic polymer and 0.3 to 3 weight percent of said protein compound, and optionally 0.2 to 2 weight percent of said release agent, is applied to the inside of said sausage skin, and that said sausage skin is subsequently dried.

9. Use of said sausage skin according to claims 1 to 6 for raw sausages, preferably for more than three weeks, particularly preferred for more than three months, for ripened raw sausages and for those types of sausage that, after completion, pass a production step where they are heated to at least 50°C.

## Revendications

1. Enveloppe de saucisse de forme tubulaire à base de cellulose avec une composition de revêtement appliquée sur la face interne, **caractérisée en ce que** la composition du revêtement comprend, à titre de composants d'adhérence, au moins un polymère cationique et au moins un composé protéinique choisi dans le groupe constitué par les gélatines, la protéine de soja, la protéine de blé, la protéine d'arachide, le caséinate et la caséine, la proportion de polymère cationique est de 0,05 à 0,6 % en poids par rapport à l'enveloppe de saucisse et la proportion de composé protéinique est de 0,01 à 0,15 % en poids par rapport à l'enveloppe de saucisse.

2. Enveloppe de saucisse selon la revendication 1, dans laquelle le polymère cationique est choisi dans le groupe constitué par les polyaminoamides, les polyéthylène-imines, et leurs produits de condensation avec l'épichlorhydrine, de préférence la résine d'épichlorhydrine-polyaminoamide.

3. Enveloppe de saucisse selon l'une des revendications précédentes, dans laquelle la composition de revêtement comprend comme composants d'adhérence au moins un mélange constitué de résine d'épichlorhydrine-polyaminoamide et de caséine ou un mélange constitué de résine d'épichlorhydrine-polyaminoamide et de caséinate, de préférence un mélange constitué de résine d'épichlorhydrine-polyaminoamide et de caséinate de calcium.

4. Enveloppe de saucisse selon l'une des revendications précédentes, dans laquelle la composition de revêtement comprend au moins un agent anti-agglomérant, de préférence la cire de carnauba.

5. Enveloppe de saucisse selon la revendication 4, dans laquelle la proportion d'agent anti-agglomérant est de 0,01 à 0,12 % en poids, par rapport à l'enveloppe de saucisse.

6. Enveloppe de saucisse selon l'une des revendications précédentes, dans laquelle l'enveloppe de saucisse est un boyau en fibres de cellulose.

7. Procédé de fabrication d'une enveloppe de saucisse tubulaire selon l'une des revendications précédentes, dans laquelle une composition de revêtement aqueuse telle que définie dans les revendications 1 à 4 est appliquée sur la face interne de l'enveloppe de saucisse et l'enveloppe de saucisse est ensuite séchée.

8. Procédé de fabrication d'une enveloppe de saucisse tubulaire selon la revendication 7, **caractérisée en ce qu'**une composition de revêtement aqueuse contenant 1 à 12 % en poids de polymère cationique et 0,3 à 3 % en poids de composé protéinique et éventuellement 0,2 à 2 % en poids d'agent antiagglomérant est appliquée sur la face interne de l'enveloppe de saucisse et l'enveloppe de saucisse est ensuite séchée.

9. Utilisation de l'enveloppe de saucisse selon l'une des revendications 1 à 6 pour une saucisse crue, de préférence pour une saucisse crue dont la maturation est supérieure à trois semaines, particulièrement préférentiellement supérieure à trois mois, et pour les types de saucisses qui subissent après leur fabrication une étape de production lors de laquelle elles sont chauffées à au moins 50 °C.
